# EUROPÄISCHE PATENTSCHRIFT

(11) **EP 0 313 034 B1**
(45) Veröffentlichungstag und Bekanntmachung des Hinweises auf die Patenterteilung: **29.06.1994**
(21) Anmeldenummer: 88117428.8
(22) Anmeldetag: 19.10.1988
(51) Int. Cl.: C05F 9/02, A01C 3/00

(54) **Fahrzeug zum Kompostieren von Abfall oder Müll**
Vehicle for composting waste or dust
Véhicule pour le compostage de déchets ou ordures

(30) Priorität: 19.10.1987 DE 3735362
(43) Veröffentlichungstag der Anmeldung: 26.04.1989
(73) Patentinhaber: Bürklin, Werner, CH-8280 Kreuzlingen (CH)
(72) Erfinder: Bürklin, Werner, CH-8280 Kreuzlingen (CH)
(74) Vertreter: Hiebsch, Gerhard F., Dipl.-Ing.

(56) Entgegenhaltungen:
- DE-A- 3 104 769
- DE-B- 1 083 186
- FR-A- 2 003 153
- FR-A- 2 263 992
- US-A- 3 356 116
- US-A- 4 397 674

## Beschreibung

Die Erfindung betrifft ein Fahrzeug zum Transport von Abfall oder Müll, insbesondere von Grobmüll wie Sträucher od.dgl., nach dem Oberbegriff der unabhängigen Patentansprüche 1, 2.

Ein derartiges Fahrzeug wird in der DE-A-3 104 769 beschrieben; es handelt sich dabei um einen sog. Reaktor. Dieser besteht aus einem liegenden Behälter mit Einfüllöffnung und im Behälterinneren angeordneter, um eine horizontale Achse umlaufender Rührschnecke, wobei im oberen Behälterbereich ein dieser Rührschnecke mit entgegengesetzter Förderrichtung wirkender, weiterer Horizontalförderer zugeordnet ist, und beide Förderelemente über einen stetigen Vertikalförderer medienseitig miteinander verbunden sind. Es ist ein Fülltrichter vorhanden, welcher mit einer das frische Kompostmaterial grob zerkleinernden Zerkleinerungseinrichtung versehen ist; eine weitere Zerkleinerung erfolgt im Inneren des Geräts. Diese Vorrichtung ist vorgesehen für die stationäre Schnellverrottung von Abfällen. Sie kann mit einer Zugdeichsel und mit Radpaaren versehen und dadurch verfahrbar gemacht werden, ist aber nicht für den Transport von kompostierbarem Material bestimmt.

In Kenntnis dieses Standes der Technik hat sich der Erfinder das Ziel gesetzt, ein Fahrzeug der genannten Art zu verbessern, so daß eine vereinfachte Behandlung von Müll -- insbesondere Grobmüll wie Gartenabfälle od. dgl. --, der in verhältnismäßig geringen Mengen an unterschiedlichen Orten entsteht, ermöglicht wird.

Zur Lösung dieser Aufgabe führen die Lehren der beiden unabhängigen Patentansprüche. Die Unteransprüche geben besonders günstige Weiterentwicklungen an.

Diese Maßgaben erlauben es, verhältnismäßig kleine Schichtrotten auf einfache Weise herzustellen, welche auch nahe des Entstehungsortes des Mülls vorübergehend aufgestellt werden können. In Ergänzung dazu nimmt das erfindungsgemäße Fahrzeug den Grobmüll am Ort des Entstehens auf, transportiert ihn in bereits zerkleinerter Form zur Rottevorrichtung, in die er unmittelbar vom Fahrzeug aus gelangt.

Im Rahmen der Erfindung dem Einlauftrichter als Zerkleinerungseinrichtung zum rottegerechten Zerkleinern eine langsamlaufende Schneidmühle nachgeschaltet und über einem Förderelement sowie unterhalb eines Prallraumes angeordnet, wobei das Förderelement an einem Durchbruch der Containerrückwand od.dgl. Fläche endet, um den zerkleinerten Müll in den Container zu transportieren. Rottegerecht bedeutet, daß in allen Fällen der Abfall so weit zu zerkleinern ist, daß er unmittelbar einer Rotteeinrichtung zugeführt werden kann.

Bei einer besonders bevorzugten weiteren Ausführungsform ist dem Einlauftrichter als Zerkleinerungseinrichtung zum rottegerechten Zerkleinern ein schnellaufender Prallrotor mit an dessen Schlagkreis angrenzendem, entsprechend gekrümmtem Rost nachgeschaltet, das oberhalb eines Förderelementes zwischen dem Einlauftrichter und einer Wandung eines Prallraumes verläuft, wobei auch dieses Förderelement am Durchbruch der Heckwand des Fahrzeuges endet. Insbesondere diese Ausführung erlaubt eine sehr effektive Zerkleinerung von Gestrüpp, Geäst und entsprechenden Grobmüllteilen zwischen Prallrotor und Rost - die sehr fein zerkleinerten Partikel fallen durch das Rost auf das Förderelement, während Hartstoffe im Prallraum nach oben geschleudert und über dem Prallraum aufgefangen werden. Dadurch ist es möglich, den zerkleinerten Müll sofort zu deponieren.

Aus Gründen besserer Handhabung kann der Einfülltrichter oberhalb der Fahrzeugpritsche angeordnet sein, was nun problemlos möglich ist, da der Prallrotor den Grob- und Gartenmüll ohne weiteres "frißt", d.h. die Gefahr eines Zurückschleuderns von Geäst od.dgl. gegen die Förderrichtung ausgeschlossen wird.

Ein erfindungsgemäß über dem Prallraum angeordneter Sammelkasten zum Auffangen der emporgeschleuderten Hartstoffe ist mit dem Prallraum durch eine mittels einer Klappe verschlossene Oeffnung verbunden; die Hartstoffe schlagen die Klappe auf und gelangen in den Sammelkasten, die Klappe fällt daraufhin selbsttätig auf die Oeffnung zurück.

Als Förderelement ist einerseits dem Prallrotor und andererseits dem Durchbruch in der Containerrückwand ein Schubboden zugeordnet, dessen Aufgabe es ist, aus dem Rost rieselndes Kleingut mit einer Schubkante aufwärts zum Container zu bringen. Statt des Schubbodens können auch mehrere Förderschnecken vorgesehen werden.

Der Heckanbau ist um eine etwa im Containerdach angeordnete Achse vom Fahrzeugheck abschwenkbar und gibt dann eine -- unterhalb des Heckanbaus vorgesehene --Austragsfördereinrichtung für den auszutragenden Müll frei. Dieses Abschwenken erfolgt vor dem Entladevorgang des Containers - in diesem schiebt eine Schubwand den Müll der Austrags - Fördereinrichtung zu, die bevorzugt als Sammelschnecke ausgebildet und mit einer Förderleitung verbunden ist. Diese wird vor dem Austragen des zerkleinerten Mülls an eine Fremdleitung angeschlossen, in der -- durch eine Schnecke oder durch Druckluft -- die sehr kleinen Müllpartikel einer noch zu schildernden Verteileinrichtung zugeleitet werden.

Nach einem weiteren Merkmal der Erfindung trägt das Fahrzeug dachwärts einen Drehkranz oder ein entsprechendes Element mit einem Greifarm, dessen Greifeinrichtung um das Fahrzeug schwenkbar ist. Damit wird erreicht, daß der Grobmüll rund um das Fahrzeug aufgenommen und dem Einlauftrichter zugetragen zu werden vermag. Derartige Greifeinrichtungen sind beispielsweise aus DE-GM 84 33 929 an sich bekannt, jedoch bei dem erfindungsgemäßen Fahrzeug in ihrer besonderen Ausgestaltung von großem Nutzen, insbesondere dann, wenn der Greifarm mit einem Gelenk versehen und beide Armteile mittels eines Hydraulikzylinders verbunden sind.

Insgesamt ergibt sich eine sehr große Vereinfachung des Zerkleinerungs- und Kompostiervorganges für Grobmüll, insbesondere für an Schwerpunkten gesammelten Garten- oder Feldmüll.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: die Seitenansicht eines teilweise geschnittenen Fahrzeuges;
- Fig. 2: ein vergrößertes Detail aus Fig. 1, gesehen in deren Pfeilrichtung II;
- Fig. 3: ein vergrößertes Detail aus Fig. 1 zu einer anderen Ausführug;
- Fig. 4: ein Teil der Fig. 3 in Draufsicht;
- Fig. 5: das Teil der Fig. 4 in Schrägsicht;
- Fig. 6: einen schematisierten Längsschnitt durch eine Kompostierungsanlage.

Ein Sammelfahrzeug 10 weist auf einer -- Luftreifen 11 überspannenden -- Pritsche 12 einen quaderartigen Containeraufbau 14 auf, dessen Dach 15 nahe der an ein Fahrerhaus 13 grenzenden Frontwand 16 einen Drehkranz 19 für einen Greiferarm 20 trägt. An letzterem ist ein Unterarm 21 angelenkt und mittels eines dem Gelenk 22 zugeordneten Hydraulikzylinders 23 steuerbar. Am freien Ende des Unterarms 21 hängt eine Greifeinrichtung 24. Dieser Greifer 20 bis 24 ist um das gesamte Fahrzeug 10 schwenkbar.

Im Containerinnenraum 26 ist in Pfeilrichtung x eine Schubwand 28 mittels eines Hydraulikzylinders 23 zwischen Frontwand 16 und einer geneigten Stau- oder Heckwand 17 bewegbar angebracht.

Ein Heckanbau 30 des Fahrzeuges 10 ist mit einem abkragenden Einfülltrichter 32 für Grobmüll, wie Sträucher od.dgl. versehen. Dessen in einem Winkel w von beispielsweise 40° gegen die Horizontale H geneigtem Boden 33 steht in einem Abstand a eine -- von einem Hydraulikzylinder 23ₚ schwenkbare Preßplatte 35 gegenüber, die oberhalb einer Schneid- oder Schneckenmühle 36 mit langsamlaufenden Walzen angelenkt ist. Diese ist einer Rückhalteeinrichtung 38 -- einer Klappe, einem Kamm oder Pendelzähnen -- vorgeschaltet, die einen Fußschlitz 39 der Stauwand 17 abdeckt.

Unterhalb der Schnecken- oder Schneidmühle 36 verläuft parallel zu ihr und in einem Winkel t von etwa 45° zur Horizontalen H ein Schubboden 40 mit Hydraulikzylinder 41 - weiter oben angeordnete Hydraulikeinrichtungen 42 erlauben im übrigen ein Abklappen des Heckanbaus um eine Achse 29 im Dachbereich.

Unterhalb jenes -- mit einer Schubkante 43 ausgerüsteten -- Schubbodens 40 und oberhalb eines Trichters 44 verläuft eine Förderschnecke 45. In den Trichter 44 mündet die Luftleitung 46 eines Gebläses 47 - andernends ist ein Schnellverschluß 48 für eine bei 49 angedeutete Fremdleitung zu erkennen.

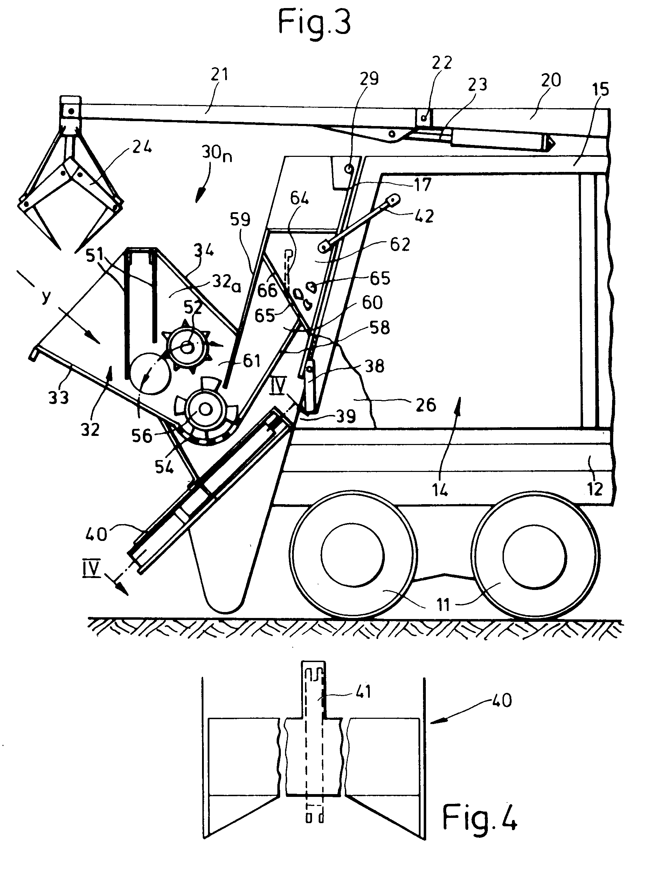

Bei dem bevorzugten Ausführungsbeispiel des Heckanbaus 30ₙ in Figur 3 hängen von der Decke 34 des Einfülltrichters 32 aus Sicherheitsgründen Gummischürzen 51 in den Trichterraum 32ₐ. In Einführrichtung y hinter den Gummischürzen 51 ist eine achsparallel schwenkbare Einzug-Stachelwalze 52 vorgesehen und unterhalb dieser -- über einem gekrümmten Rost 54 --ein prallrotor 56, wie er beispielhaft in der Schrift zum DE-GM 87 04 007 beschrieben ist. Jener gekrümmte Rost 54 sitzt zwischen dem Boden 33 des Einfülltrichters 32 und einer geneigten Zwischenwand 58, die mit einer Anbauaußenwand 59 des Heckanbaus 30 einen Prallraum 60 begrenzt. Die Anbauaußenwand 59 endet am Prallrotor 56 mit einem Prallkamm 61.

An den Prallraum 60 schließt nach oben hin ein Sammelkasten 62 für Steine 63 od.dgl. Hartteile an, welche durch eine mittels einer Klappe 64 verschließbare Oeffnung 65 einer Querplatte 66 aufwärts gelangen und beliebig entfernt werden können. Beim Aufwärtsschleudern der Steine 63 od.dgl. wird die Klappe 64 nach oben hin geöffnet und fällt anschließend selbsttätig auf die Oeffnung 65 zurück.

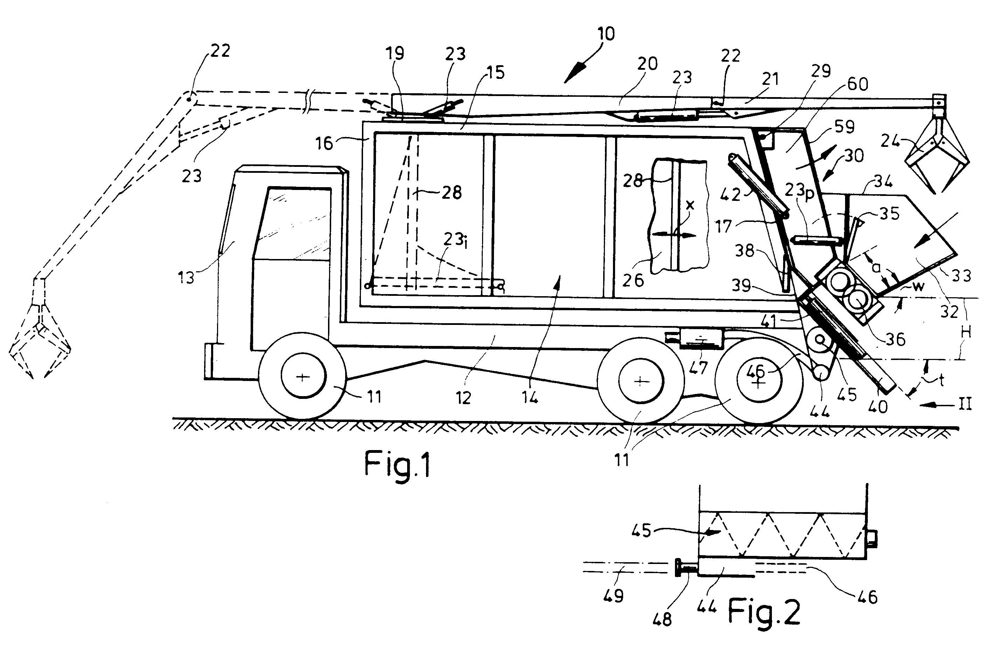

In Fig. 3 sind die zu Fig. 1 beschriebenen Teile 44 bis 49 ebenfalls vorhanden, aus Gründen besserer Uebersichtlichkeit jedoch in der Darstellung vernachlässigt.

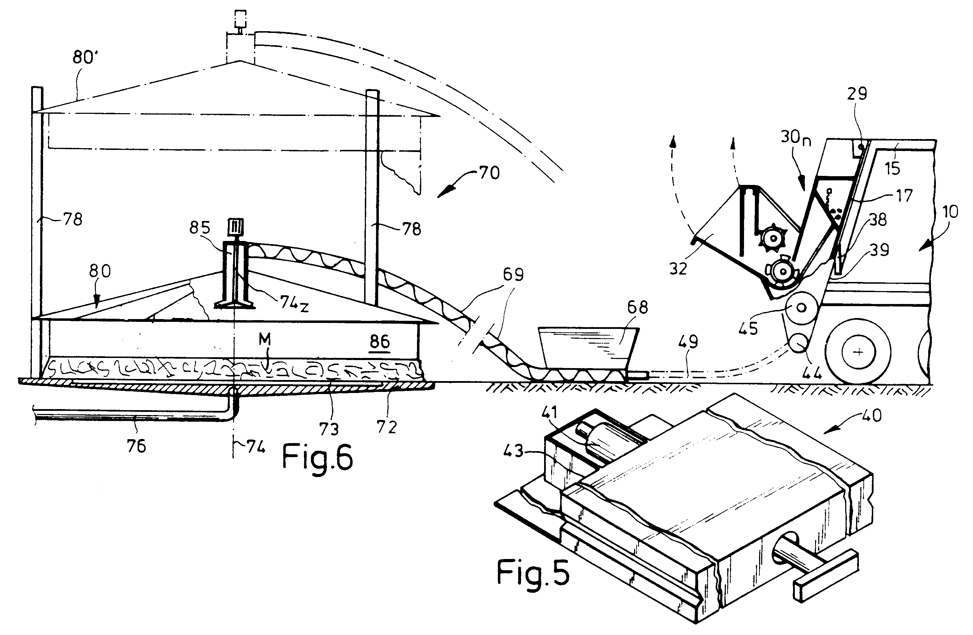

Statt des in Fig. 5 vergrößerten Schubbodens 40 sind als Zuführorgane für das durch das Rost 54 fallende Partikel zum Containerinnenraum 26 auch mehrere Förderschnecken denkbar; der Grobmüll wie Sträucher od.dgl. wird von der achsparallel bewegbaren Einzugswalze 52 dem Prallrotor 56 zugeführt, dank diesem über dem gekrümmten Rost 54 zerkleinert und fällt durch letzteres auf den Schubboden 40. Von diesem -- oder, wie gesagt, einem entsprechenden Förderer -- gelangen die zerkleinerten Teile in den Containerraum 26; Hartstoffe werden nach oben durch den Prallraum 58 in den Sammelkasten 62 gefördert.

Ist das Fahrzeug 10 gemäß Fig. 6 am Entladeort angekommen, wird der Heckanbau 30, 30ₙ um seine Achse 29 hochgeklappt und die Abfördereinrichtungen 44 bis 48 in Betrieb genommen; die Fremdleitung 49 wird angeschlossen und die Schubwand 28 beginnt, den Containerinhalt dem Fußschlitz 39 in der Heckwand 17 zuzuschieben.

Der zerkleinerte und hartstoffreie Müll gelangt durch eine trogartige Zwischenstation 68 mit integrierter Förderschnecke oder über eine Luftförderanlage 69 zu einem Zuführschacht 85 im Dachzenit 74_{z} einer Kleinrotteanlage 70, in der unterhalb eines an Tragsäulen 78 verfuhrbaren Daches 80 mit Ringschürze 86 eine Miete M zu erkennen ist.

Die Rotte-Anlage 70 besitzt eine annähernd kreisförmige polygone Bodenplatte 72 mit subaequoralem Kanalsystem; ein unterirdischer Luftkanal ist in Fig. 6 bei 73 dargestellt, andere Kanäle sind nur angedeutet. Sie gehen radial von einem Zentrum 74 des Bauwerkes aus und sind mit nach oben hin weisenden -- in der Zeichnung nicht erkennbaren -- Schlitzen oder Löchern für die Luftzu- oder Abfuhr versehen. Außerdem sind Luftröhre in den Tragsäulen 78 des Daches 80 enthalten, das in eine Position 80' verfahren werden kann.

## Patentansprüche

1. Fahrzeug zum Transport von Abfall oder Müll, insbesondere von Grobmüll wie Sträucher od.dgl., mit einem den Abfall aufnehmenden Behälter und einem Heckaufbau mit Einlauftrichter und Zerkleinerungseinrichtung zum Zuführen des Abfalles in den Behälter,
dadurch gekennzeichnet,
daß dem Einlauftrichter (32) als Zerkleinerungseinrichtung zum rottegerechten langsamlaufende Schneidmühle (36) nachgeschaltet und über einem Förderelement (40) sowie unterhalb eines Prallraumes (60) angeordnet ist, wobei das Förderelement an einem Durchbruch (38) der Containerrückwand (17) od.dgl. endet.

2. Fahrzeug zum Transport von Abfall oder Müll, insbesondere von Grobmüll wie Sträucher od.dgl., mit einem den Abfall aufnehmenden Behälter und einem Heckaufbau mit Einlauftrichter und Zerkleinerungseinrichtung zum Zuführen des Abfalles in den Behälter, dadurch gekennzeichnet, daß dem Einlauftrichter (32) als Zerkleinerungseinrichtung zum rottegerechten Zerkleinern ein Prallrotor (56) mit an dessen Schlagkreis angrenzendem, entsprechend gekrümmtem Rost (54) nachgeschaltet ist, das oberhalb eines Förderelementes (40) zwischen dem Einlauftrichter und einer Wandung (58) eines Prallraumes (60) verläuft, wobei das Förderelement an einem Durchbruch (38) der Containerrückwand (17) od.dgl. endet.

3. Fahrzeug nach Anspruch 1 oder 2, dadurch gekennzeichnet, daß der Schneidmühle (36) oder dem Prallrotor (56) wenigstens eine schwenkbare Einzugswalze (52) in Einfüllrichtung (y) vorgeordnet ist.

4. Fahrzeug nach einem der Ansprüche 1 bis 3, dadurch gekennzeichnet, daß ein über dem Prallraum (60) angeordneter Sammelkasten (62) für Hartstoffe mit dem Prallraum durch eine mittels einer Klappe (74) verschlossene Oeffnung (65) verbunden ist.

5. Fahrzeug nach einem der Ansprüche 1 bis 4, d.g., daß als Förderelement (40) ein Schubboden und/oder wenigstens eine Förderschnecke dienen/dient.

6. Fahrzeug nach einem der Ansprüche 1 bis 5, dadurch gekennzeichnet, daß der Heckanbau (30) von dem Durchbruch (39) in der Heckwand (17) des Fahrzeuges (10) wegführbar angebracht und unterhalb des Heckanbaus am Fahrzeug eine Fördereinrichtung (44 bis 48) für ausgetragenen Müll vorgesehen ist, wobei gegebenenfalls eine quer zur Fahrzeuglängsachse verlaufende Sammelschnecke (45) od. dgl. an eine Förderleitung (48) angeschlossen ist.

7. Fahrzeug nach wenigstens einem der Ansprüche 1 bis 6, dadurch gekennzeichnet, daß im Behalterinnenraum (26) eine Schubwand (28) vorgesehen sowie zwischen der Frontwand (16) des Fahrzeuges (10) und dessen Heckwand (17) bewegbar ist, wobei die Schubwand (28) gegebenenfalls mit einem Hydraulikzylinder verbunden ist.

8. Fahrzeug mit auf seinem Dach vorgesehenem Greifarm nach wenigstens einem der Ansprüche 1 bis 7, dadurch gekennzeichnet, daß auf dem Dach (15) ein Drehkranz (19) od.dgl. für den Greifarm (20) festgelegt und dessen Greifeinrichtung (24) um das Fahrzeug (10) schwenkbar ist, wobei gegebenenfalls der Greifarm (20) mit einem Gelenk (22) und einem beide Armteile verbindenden Hydraulikzylinder (23) versehen ist.

9. Fahrzeug nach wenigstens einem der Ansprüche 1 bis 8, dadurch gekennzeichnet, daß die Förderleitung (48) an eine Zwischenstation (68) für eine Kompostmiete (M) anschließbar ausgebildet ist.

## Claims

1. Vehicle for transporting waste or refuse, especially coarse refuse such as bushes or the like, comprising a container receiving the waste and a rear body with a feed hopper and a comminuting device for supplying the waste to the container, characterised in that a slow-speed cutting mill (36) is arranged downstream of the feed hopper (32) as a comminuting device for comminution ready for composting and is arranged above a conveying element (40) and below an impact chamber (60), the conveying element ending at an opening (38) in the container rear wall (17) or the like.

2. Vehicle for transporting waste or refuse, especially coarse refuse such as bushes or the like, comprising a container receiving the waste and a rear body with a feed hopper and a comminuting device for supplying the waste to the container, characterised in that an impact rotor (56) with an appropriately curved grate (54) adjacent to its circle of impact is arranged downstream of the feed hopper (32) as a comminuting device for comminution ready for composting and extends above a conveying element (40) between the feed hopper and one wall (58) of an impact chamber (60), the conveying element ending at an opening (38) in the container rear wall (17) or the like.

3. Vehicle according to claim 1 or claim 2, characterised in that at least one pivoting feed roller (52) is arranged in front of the cutting mill (36) or the impact rotor (56) in the feeding direction (y).

4. Vehicle according to one of claims 1 to 3, characterised in that a receiver (62) for hard materials arranged above the impact chamber (60) is connected to the impact chamber by means of an opening (65) closed by means of a flap (74).

5. Vehicle according to one of claims 1 to 4, characterised in that a pusher plate and/or at least one screw conveyor serve/serves as a conveying element (40).

6. Vehicle according to one of claims 1 to 5, characterised in that the rear structure (39) is mounted so that it can be moved away from the opening (39) in the rear wall (17) of the vehicle (10) and a conveyor means (44 to 48) for discharged refuse is provided on the vehicle below the rear structure, a collecting screw conveyor (45) or the like extending transversely to the longitudinal axis of the vehicle optionally being connected to a delivery conduit (48).

7. Vehicle according to at least one of claims 1 to 6, characterised in that a pusher wall (28) is provided in the inner space (26) of the container and can be moved between the front wall (16) of the vehicle (10) and the rear wall (17) thereof, the pusher wall (28) optionally being connected to a hydraulic cylinder.

8. Vehicle with a gripper arm provided on its roof according to at least one of claims 1 to 7, characterised in that a slewing ring (19) or the like for the gripper arm (20) is secured to the roof (15) and its grab (24) can be pivoted about the vehicle (10), the gripper arm (20) optionally being provided with a hinge (22) and a hydraulic cylinder (23) connecting the two arm parts.

9. Vehicle according to at least one of claims 1 to 8, characterised in that the delivery conduit (48) is designed so that it can be connected to an intermediate station (68) for a compost heap (M).

## Revendications

1. Véhicule pour le transport d'ordures ou de déchets, en particulier de gros déchets tels des arbustes, ou similaires, équipé d'un réservoir pour la réception des ordures et d'un équipement arrière avec trémie d'entrée et dispositif de broyage pour amener les ordures dans le réservoir,
caractérisé en ce que,
en aval de la trémie d'entrée (32) est placé comme dispositif de broyage facilitant la décomposition, un broyeur (36) à faible vitesse disposé au-dessus d'un élément de transport (40) et au-dessous d'un compartiment de rebondissement (60), l'élément de transport se terminant sur une percée (38) de la paroi arrière (17) du conteneur ou similaire.

2. Véhicule pour le transport d'ordures ou de déchets, en particulier de gros déchets tels des arbustes ou similaire, équipé d'un réservoir pour la réception des ordures et d'un équipement arrière avec trémie d'entrée et dispositif de broyage pour amener les ordures dans le réservoir, caractérisé en ce qu'en aval de la trémie d'entrée (32) est placé comme dispositif de broyage facilitant la décomposition, un rotor de rebondissement (56) avec une grille (54) adjacente à son cercle de frappe et courbée de façon adéquate, laquelle grille s'étend au-dessus d'un élément de transport (40) entre la trémie d'entrée et une paroi (58) d'un compartiment de rebondissement (60), l'élément de transport se terminant sur une percée (38) de la paroi arrière (17) du conteneur ou similaire.

3. Véhicule selon la revendication 1 ou 2, caractérisé en ce qu'en amont du broyeur (36) ou du rotor de rebondissement (56) est placé au moins un rouleau d'alimentation orientable (52) dans le sens du remplissage (y).

4. Véhicule selon l'une des revendications 1 à 3, caractérisé en ce qu'un bac de ramassage (62) pour matières solides disposé au-dessus du compartiment de rebondissement (60) est relié au compartiment de rebondissement par une ouverture (65) fermée par une trappe (74).

5. Véhicule selon l'une des revendications 1 à 4, caractérisé en ce qu'un plateau de poussée et/ou au moins une hélice transporteuse assure(nt) la fonction d'élément de transport (40).

6. Véhicule selon l'une des revendications 1 à 5, caractérisé en ce que l'équipement arrière (30) est monté de façon à pouvoir être écarté de la percée (39) dans la paroi arrière (17) du véhicule (10) et qu'en-dessous de l'équipement arrière est prévu sur le véhicule un dispositif de convoyage (44 à 48) pour les ordures déchargées, une vis sans fin collectrice (45) ou similaire, perpendiculaire à l'axe longitudinal du véhicule, étant le cas échéant raccordée à une conduite de convoyage (48).

7. Véhicule selon l'une au moins des revendications 1 à 6, caractérisé en ce qu'à l'intérieur (26) du réservoir est prévue une cloison (28) déplaçable entre la paroi avant (16) du véhicule (10) et sa paroi arrière (17), la cloison étant le cas échéant raccordée à un cylindre hydraulique.

8. Véhicule avec un bras de grappin prévu sur son toit selon l'une au moins des revendications 1 à 7, caractérisé en ce que sur le toit (15) est fixée une couronne d'orientation (19), ou similaire, pour le bras de grappin (20), et que son grappin (24) peut pivoter autour du véhicule (10), le bras de grappin (20) étant le cas échéant muni d'une articulation (22) et d'un cylindre hydraulique (23) reliant les deux parties du bras.

9. Véhicule selon l'une au moins des revendications 1 à 8, caractérisé en ce que la conduite de convoyage (48) est formée de façon à pourvoir être reliée à une station intermédiaire (68) pour une meule de compostage (M).
